# EUROPÄISCHE PATENTSCHRIFT

(11) **EP 0 204 883 B1**
(45) Veröffentlichungstag und Bekanntmachung des Hinweises auf die Patenterteilung: **14.04.1993**
(21) Anmeldenummer: 86100909.0
(22) Anmeldetag: 23.01.1986
(51) Int. Cl.: A01G 9/00, A01G 9/10, E04D 11/00

(54) **Trägerplatte für ein zur Dachbegrünung dienendes Pflanzsubstrat**
Carrier plate for a plant substrate serving for turfing a roof
Plaque porteuse pour un substrat de plantation servant à gazonner un toit

(30) Priorität: 24.01.1985 DE 3502296; 04.03.1985 DE 3507563; 04.10.1985 DE 3535448
(43) Veröffentlichungstag der Anmeldung: 17.12.1986
(73) Patentinhaber: Steinbronn, Hans, D-55124 Mainz (DE)
(72) Erfinder: Steinbronn, Hans, D-55124 Mainz (DE)
(74) Vertreter: Weber, Dieter, Dr.

(56) Entgegenhaltungen:
- DE-A- 2 637 987
- DE-A- 2 755 958
- DE-A- 3 045 390
- DE-U- 6 901 517

## Beschreibung

Die Erfindung betrifft eine Trägerplatte für ein zur Dachbegrünung dienendes Pflanzsubstrat.

Die Dachbegrünung von Flachbauten erfreut sich steigender Beliebtheit, da sich das allgemeine Umweltbewußtsein in Richtung auf Naturerhaltung und Naturförderung entwickelt. Leider wird die Dachbegrünung von Flachbauten immer noch durch teure und komplizierte Vorrichtungen behindert, die eine derartige Begrünung ermöglichen sollen.

Bei einer für die Dachbegrünung einzubringenden Erdschicht besteht immer die Forderung, daß diese Erdschicht drainiert werden muß, damit aufgefangenes Regenwasser, das ja nicht nach unten durch das wasserdichte Flachdach ablaufen kann, aus dem Pflanzsubstrat herausgeführt wird. Das Pflanzsubstrat muß luftzugängliche freie Porenräume zur Entwicklung der Kleinlebewesen beibehalten.
Wenn aber eine Drainierung eingerichtet wird, erfordert dies umgekehrt auch wieder eine Bewässerung, die dann zumeist auf künstlichem Wege unter Einbau einer Feuchtigkeitsmeßapparatur und dergleichen geschieht.

In der DE-PS 27 55 958 wird eine dickwandige, gut wärmeisolierende Trägerplatte aus Schaumkunststoff beschrieben, die jedoch den Nachteil eines erheblichen Aufwandes für die Fertigung hat. Die hieraus weiterentwickelte sehr dünnwandige -bevorzugt aus gezogenem Polyäthylen bestehende-Trägerplatte gemäß DE-OS 30 45 390 hat hingegen wegen nicht ausreichender Wärmeisolierungseigenschaft den Nachteil, nur bei Dächern eingesetzt werden zu können, bei denen die Trägerplatte selbst keinen wesentlichen Beitrag zur Wärmeisolierung bringen muß.

Der Erfindung liegt die Aufgabe zugrunde, eine selbsttätig ablaufende Drainage und Bewässerung zu erreichen, die lediglich einfach und billig herstellbare, wartungsfreie Mittel erfordern, welche gleichzeitig eine wirkungsvolle Wärmeisolierung für das Dach bewirken.

Gelöst wird diese Aufgabe bei einer Trägerplatte für ein zur Dachbegrünung dienendes Pflanzsubstrat nach der Erfindung dadurch, daß die Trägerplatte als durchbruchfreie, aus einer an sich bekannten Schaumkunststoffplatte bestehende Wasserspeicherwanne ausgebildet ist, die nur von der Oberseite der Randstege oder etwaiger gleichhoher Mittelstege ausgehende, zur Plattenunterseite und zu dem dort angeordneten Rillengitter führende Überlaufwasserabflußkanäle aufweist und deren freier Innenraum durch eine Anzahl beliebig geformter, bis zur Plattenoberseite reichende hohlraumfreie Höcker oder Rippen ausgefüllt ist, die eine Breite und einen freien Abstand voneinander von etwa einer Daumenbreite nicht übersteigen, daß auf mehreren Höckern oder Rippen ein teilweise in den Rippenzwischenraum hineinragender Dochtlappen aufliegt und daß ein an sich bekannter aufgelegter Bewässerungsvlies eine oder mehrere Schaumkunststoffplatten mit den Dochtlappen abdeckt.

Weitere erfinderische Merkmale und Abwandlungsmaßnahmen werden durch die Patentansprüche charakterisiert. Dieser erfindungsgemäß einfache dreiteilige Grundaufbau umfaßt nur wenige billige und einfach einzubauende Bauteile.

Nachfolgend werden anhand der Zeichnung drei Ausführungsformen der Erfindung näher erläutert.

Es zeigen :
- Figur 1 :: einen Querschnitt durch ein Flachdach mit Begrünung,
- Figur 2 :: eine Draufsicht auf eine in verkleinertem Maßstab dargestellte Schaumkunststoffplatte einer ersten Ausführungsform,
- Figur 3 :: einen Querschnitt durch den Gegenstand nach Figur 2 entlang Schnittlinie III-III in Figur 2,
- Figur 4 :: eine Darstellung der Unterseite der Schaumkunststoffplatte nach Figur 2,
- Figur 5 :: einen Querschnitt durch ein Flachdach mit Begrünung, auf dem die zweite Ausführungsform von Schaumkunststoffplatten verlegt ist,
- Figur 6 :: eine Draufsicht auf eine in verkleinertem Maßstab dargestellte Schaumkunststoffplatte nach Figur 5,
- Figur 7 :: einen Querschnitt durch den Gegenstand nach Figur 6 entlang der Schnittlinie VII-VII,
- Figur 8 :: eine Darstellung der Unterseite der Schaumkunststoffplatte nach Figur 5,
- Figur 9 :: in Draufsicht und Teildarstellung zwei an den Rändern ineinander gesteckte Trägerplatten einer dritten Ausführungsform,
- Figur 10 :: einen Querschnitt durch den Gegenstand nach Figur 9 entlang Schnittlinie X-X,
- Figur 11 :: eine Draufsicht auf sechs nebeneinander verlegte Trägerplatten nach Figur 9 mit einem durchgehenden Wasserrohr und
- Figur 12 :: einen Querschnitt durch den Gegenstand nach Figur 11 entlang der Schnittlinie XII-XII.

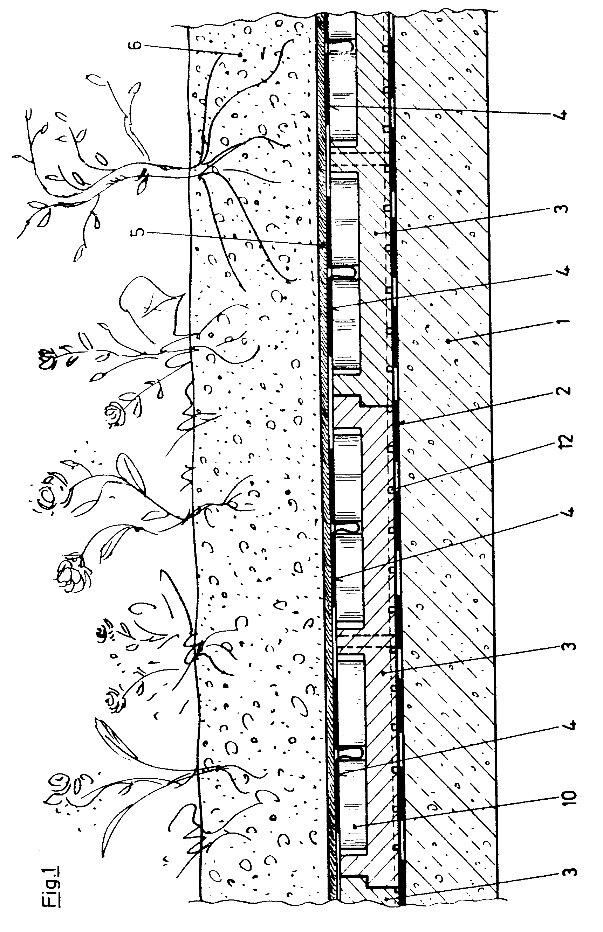

Die Darstellung gemäß Figur 1 zeigt, daß auf dem aus Stahlbeton bestehenden Flachdach 1 und einer aufgelegten Dampfsperrschicht 2 dicht nebeneinander Schaumkunststoffplatten 3,3,3,... aufgelegt sind. Es handelt sich hierbei um mit bekannten Plattenherstellautomaten hergestellte Standard-Wärmedämmplatten üblicher Randausbildung und Unterseitengestaltung.

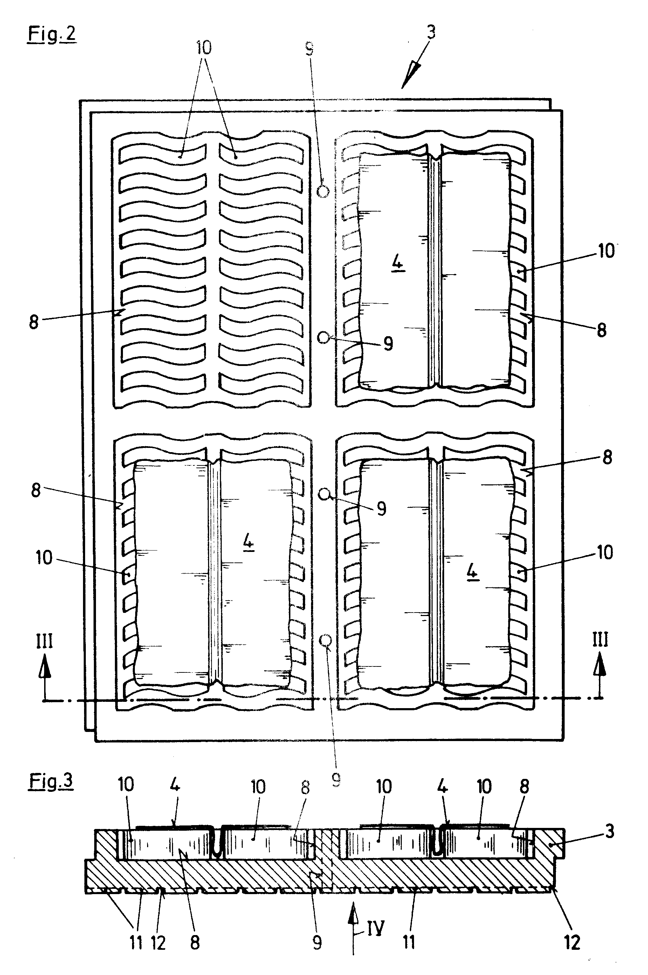

Die Oberseite dieser Schaumkunststoffplatten 3 ist jedoch in besonderer Weise gestaltet. Wie aus der Darstellung gemäß Figur 2 zu entnehmen ist, ist die Schaumkunststoffplatte 3 als Wasserspeicherwanne ausgebildet, hat also in der Bodenwand keinerlei Wasserdurchlaßkanäle.

Zweckmäßig wird der freie Innenraum dieser Wasserspeicherwanne durch zwei quer zueinander verlaufende Mittelrippen in vier Felder 8,8,8 und 8 unterteilt. Diese Mittelstege haben die gleiche Höhe wie die Randstege. Im Unterschied zu letzteren weist zumindest eine der Mittelstege mehrere Durchbrechungen 9 auf, welche als Wasserabflußkanäle für Überschußwasser dienen. Die oberen Eintrittsöffnungen dieser Wasserabflußkanäle 9 liegen in der Ebene der Oberseite der Schaumkunststoffplatten 3, so daß ein Ablaufen des aufgefangenen Regenwassers erst dann einsetzt, wenn die vier Innenraumfelder 8 mit Wasser gefüllt sind.

Diese Innenraumfelder 8 sind ferner mit einer Anzahl von Höckern oder Rippen 10 ausgefüllt, zwischen denen lediglich ein freier Zwischenraum von nicht mehr als Daumenbreite offenbleibt. Die besagten Höcker oder Mittelrippen 10 besitzen ihrerseits eine Breite von nicht mehr als Daumenbreite. Durch diese Wahl der beiden Abmessungen wird erreicht, daß die Innenraumfelder 8 etwa zu 50% ihres Fassungsvermögens durch Rippenkörper und zu 50 % durch aufgefangenes Wasser ausgefüllt sind. Die zahlreichen eng zusammenstehenden Stützrippen 10 bewirken, daß die Schaumkunststoffplatten 3 überall gewichtsmäßig belastet werden können und daß dabei gleichzeitig die freien Zwischenräume zwischen den Stützrippen 10 frei bleiben.

Dies ist die Voraussetzung dafür, daß auf jedes Innenraumfeld 8 ein Dochtlappen 4 aufgelegt werden kann, der mit seinem Mittelteil in eine Mittelrille zwischen den paarweise angeordneten Stützrippen 10 senkrecht eintaucht.

Auf diese mit jeweils vier Dochtlappen versehene Schaumkunststoffplatte wird als letztes ein Bewässerungsvlies 5, zweckmäßig aus unverrottbarem Polyesterfilz, aufgelegt.

Dieser Bewässerungsvlies 5 kann als Rollenware auf mehrere Schaumkunststoffplatten 3 verlegt werden.

Die beschriebenen Schaumkunststoffplatten mit den eingelegten vier Dochtlappen 4 und dem darüber gelegten Bewässerungsvlies 5 stellen zusammen eine geeignete Unterlage für ein beliebiges Pflanzsubstrat 6 dar. Durch die hohe Anzahl von Stützrippen 10 wird das Pflanzsubstrat 6 an sehr vielen Punkten unterstützt und gleichzeitig gewährleistet, daß durch die hohe Anzahl von zwischen den Stützrippen 10 verbleibenden freien Zwischenräumen ein ausreichend großer Aufnahmeraum für Regenwasser geschaffen wird. Diese freien Zwischenräume werden außerdem durch die aufliegenden Dochtlappen 4 und das Bewässerungsvlies 5 ausreichend fest überdacht.

Die Unterseite jeder Schaumkunststoffplatte 3 ist in herkömmlicher Weise gestaltet und besitzt ein orthogonal verlaufendes Rillensystem 12, welches eine große Anzahl von Stützfußkassetten 11 entstehen läßt.

Die oben beschriebene Einrichtung ermöglicht somit die notwendige Drainage und gleichzeitig die selbsttätig eintretende Bewässerung, da die Dochtlappen 4 und das Bewässerungsvlies 5 infolge der Kapillarkräfte in den Zwischenräumen zwischen den Zwischenrippen 10 aufgefangenes Regenwasser bei Bedarf wieder nach oben steigen lassen. Ein gesonderte Bewässerungsregelung ist somit entbehrlich.

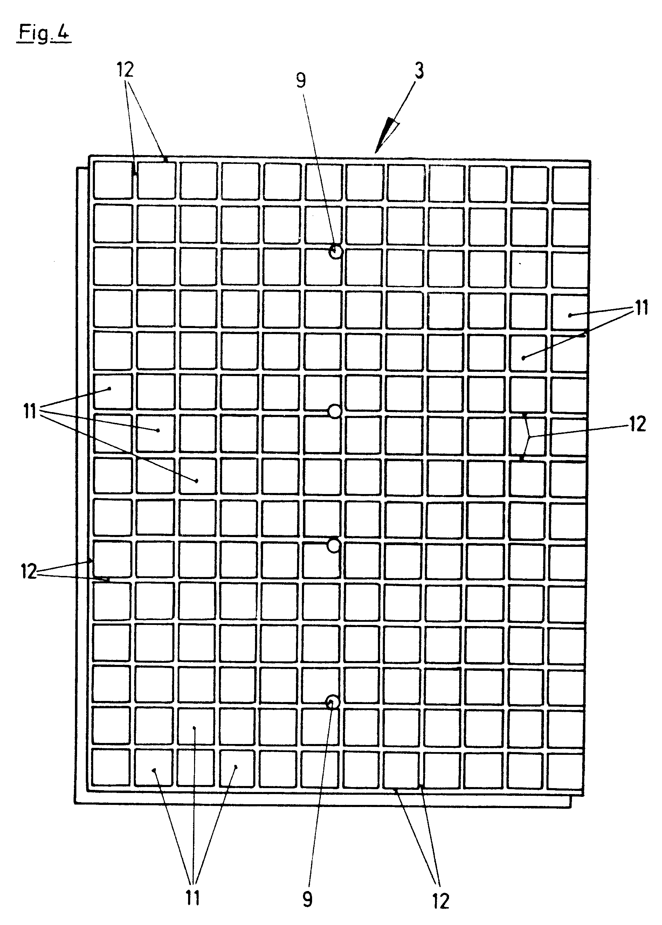

Die in den Figuren 1 bis 4 beschriebene erste Ausführungsform einer Trägerplatte hat den Nachteil, daß sie nur auf neigungsfreien Flachdächern einsetzbar ist. Bei Flachdächern mit geringer Neigung würde das durch die zuerst beschriebene Trägerplatte aufgefangene Regenwasser über den zutiefst liegenden Seitenrand der Trägerplatte hinweg ablaufen, so daß die Trägerplatte das aufgefangene Regenwasser nicht zurückhalten würde.

Es stellt sich daher die Aufgabe, eine abgewandelte und verbesserte Ausführungsform einer Trägerplatte der eingangs erwähnten Art vorzuschlagen, die auch und besonders bei geneigten Flachdächern einsetzbar ist.

Gelöst wird diese Aufgabe durch eine zweite Ausführungsform einer Trägerplatte der eingangs beschriebenen Art dadurch, daß der freie Innenraum durch eine Anzahl parallel zueinander verlaufende Zwischenstege in eine gleiche Anzahl von Feldern aufgeteilt und in jedem Feld ein Dochtlappen angeordnet ist.

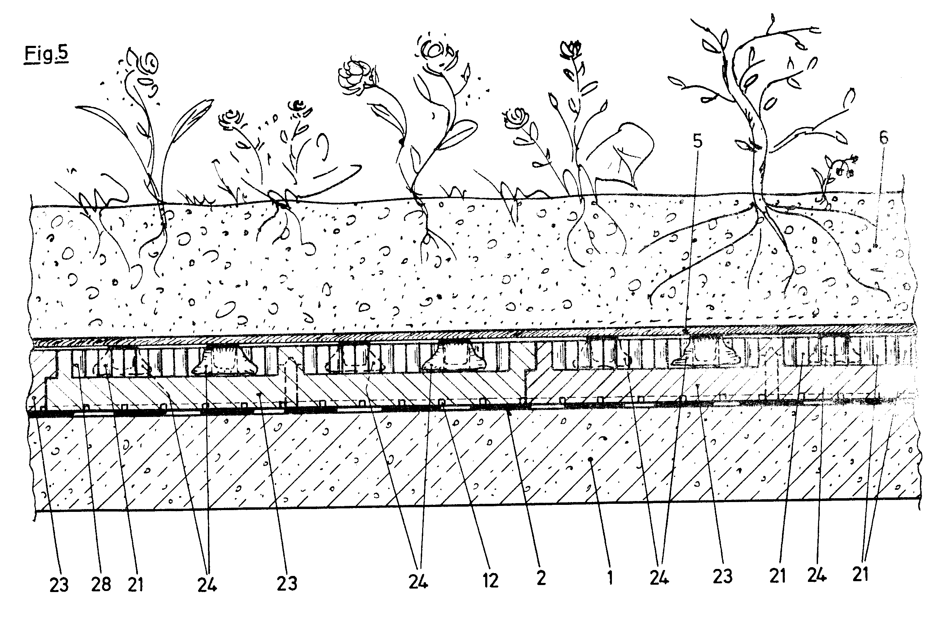

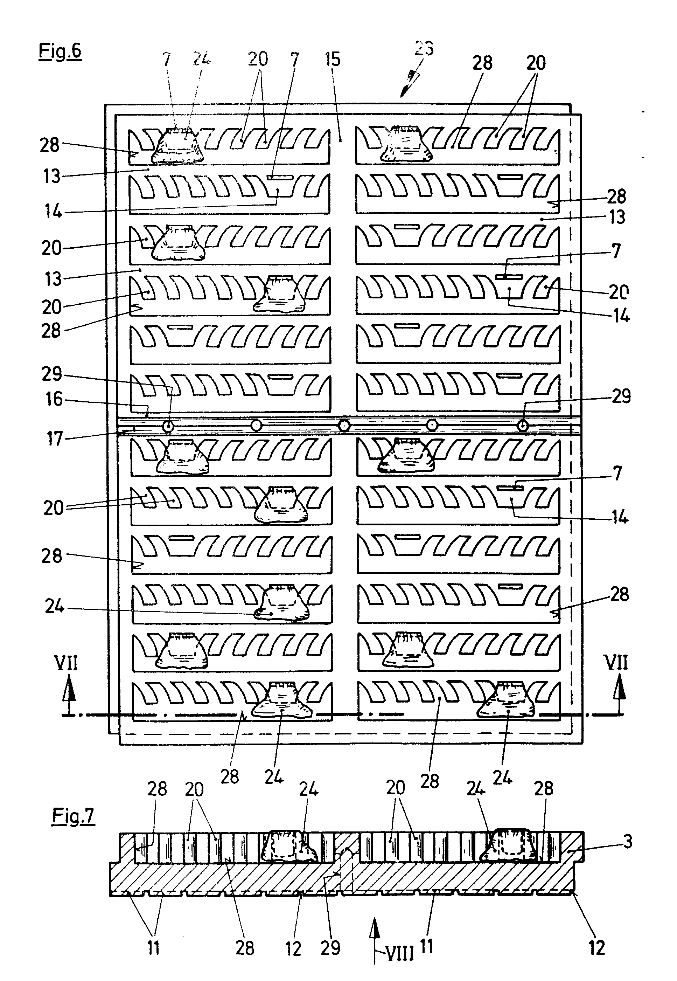

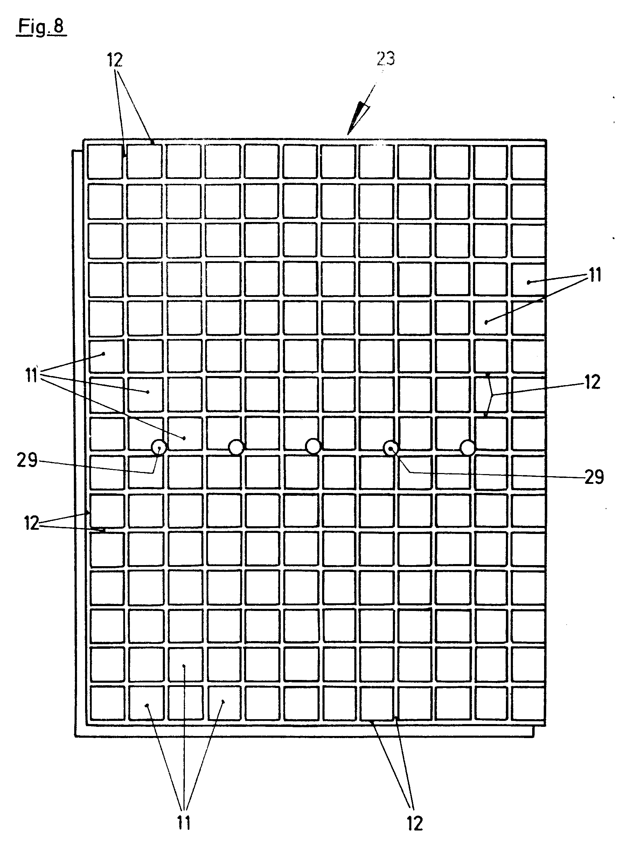

Die Darstellung der zweiten Ausführungsform gemäß Figuren 5 bis 8 zeigt, daß auf dem aus Stahlbeton bestehenden Flachdach 1 und einer aufgelegten Dampfsperrschicht 2 dicht nebeneinander ebenfalls Schaumkunststoffplatten 23,23,23,... aufgelegt sind. Die Oberseite dieser Schaumkunststoffplatten 23 zeigt eine andere besondere Gestaltung.

Der freie Innenraum einer Schaumkunststoffplatte 23 ist durch eine Anzahl parallel zueinander verlaufender Zwischenstege 13,13,... in eine gleiche Anzahl von Feldern 28,28,... aufgeteilt,wobei in jedem Feld 28,28,... ein Dochtlappen 24,24,... angeordnet ist.

Diese Zwischenstege 13,13, ... haben die gleiche Höhe wie die Randstege. Im Unterschied zu letzteren kann ein Zwischensteg 16 mehrere Wasserabflußlöcher 29,29,... aufweisen, die zweckmäßig durch eine Wasserablaufrinne 17 miteinander verbunden sind.

Ein weiterer hierzu quer verlaufender Zwischensteg 15 weist solche Wasserabflußlöcher 29,29 nicht auf, da dieser Zwischensteg in Richtung des größten Einfallwinkels liegt, wogegen der erstgenannte Zwischensteg 16 genau waagrecht verläuft. Hierdurch wird die Möglichkeit gegeben, daß überschüssiges aufgefangenes Regenwasser in Richtung des Mittelsteges 15 abläuft und bei Überwindung des quer hierzu verlaufenden Mittelsteges 16 durch die Wass-erablaufrinne 17 aufgefangen und durch die Wasserabflußlöcher 29 abgeführt wird.

Die freien Innenraumfelder 28 sind durch eine Anzahl von Höckern oder Rippen 20 ausgefüllt, zwischen denen lediglich ein freier Zwischenraum von nicht mehr als Daumenbreite offenbleibt. Die besagten Höcker oder Mittelrippen 20 besitzen ihrerseits eine Breite von nicht mehr als Daumenbreite.
Die Rippen 20 sind als Fortsätze der Zwischenstege 13 ausgebildet und verlaufen spitzwinklig zu diesen.

Eine Rippe 14 eines Zwischensteges 13 ist jedoch breiter bemessen als die übrigen Rippen 20 und weist einen Einsteckschlitz 7 zum teilweisen Einstecken und Festklemmen eines Dochtlappens 24 auf. Dieser Dochtlappen 24 liegt also teilweise auf der Oberseite der breiter bemessenen Rippe 14 auf und taucht teilweise in den freien Zwischenraum des freien Innenraumfeldes 28 hinein. Hierdurch saugt der Dochtlappen 24 aufgesammeltes Regenwasser aus dem freien Innenraumfeld 28 auf und leitet es nach oben zu einem die Schaumstoffplatte 23 abdeckenden Bewässerungsvlies 5.

Die zweite Ausführungsform ermöglicht somit ebenfalls die notwendige Drainage und gleichzeitig die selbsttätig eintretende Bewässerung, da die Dochtlappen 4 und der Bewässerungsvlies 5 infolge der Kapillarkräfte in den Zwischenräumen zwischen den Stützrippen 20 aufgefangenes Regenwasser bei Bedarf wieder nach oben steigen lassen. Andererseits sammelt sich in den durch die größere Anzahl von Zwischenstegen 13 gebildeten Feldern 28 auch bei geneigtem Flachdach eine ausreichende Wassergesamtmenge an.

Die bisher behandelten zwei Ausführungsformen von Trägerplatten haben wegen ihrer nicht unbedeutenden Wasseraufnahmefähigkeit den Nachteil, daß die mit Wasser gefüllten Trägerplatten ein recht hohes Gewicht erreichen können. Dies kann bei neu zu erstellenden Schrägdächern bei der statischen Berechnung mitberücksichtigt werden. Bei bereits bestehenden Schrägdächern, die mit einer Dachbegrünung versehen werden sollen, besteht diese Möglichkeit allerdings nicht und eine ingesamt allzu schwere Dachbegrünung könnte daher in manchen Fällen aus statischen Gründen auf Bedenken stoßen.

Für diese Fälle stellt sich daher die Aufgabe, eine Trägerplatte derart zu gestalten, daß das Quadratmetergewicht herabgesetzt wird und eine vorbestimmbare Größe nicht überschreitet.

Gelöst wird diese Aufgabe durch eine dritte Ausführungsform dadurch, daß die Oberseiten des oberen und unteren Randstegs sowie der etwaigen Mittelstege der Trägerplatte in Einfallrichtung verlaufende Wasserüberlaufrinnen aufweisen und die an die Firstlinie anstoßende Trägerplatte an ihrem oberen Randsteg einen Teil eines parallel zur Firstlinie verlaufenden durchgehenden Wasserrohrs mit einer Wasseraustrittsöffnung j-e Trägerplatte trägt, in das je nach Bedarf Wasser eingespeist wird.

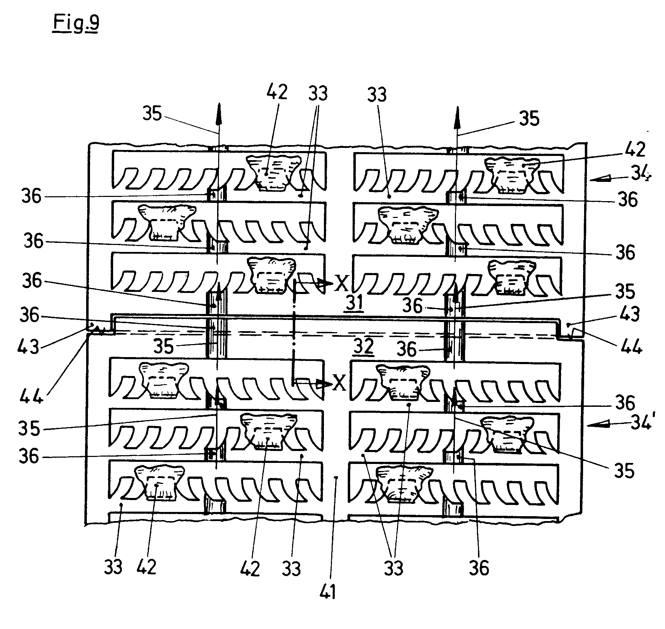

Gemäß der in den Figuren 9 bis 11 gegebenen Darstellung der dritten Ausführungsform ist der obere Randsteg 31 einer tiefergelegenen Trägerplatte 34 mit dem unteren Randsteg 32' einer höhergeleg-enen benachbarten Trägerplatte 34' durch die beiden ineinandergreifenden leistenförmigen Vorsprünge 46 und 47 formschlüssig verbunden.

Auf den Oberseiten dieser miteinander verbundenen oberen und unteren Randstege 31 und 32 sind quer zu deren Längsachsen verlaufende Wasserüberlaufrinnen 36 vorgesehen, die sich auch in den Mittelstegen 33 wiederholen, so daß insgesamt in der Einfallrichtung gemäß Pfeil 35 in den Trägerplatten aufgegangenes Wasser in dem Maß abfließen kann, wie tief die Wasserüberlaufrinnen 36 eingeschnitten sind und wie stark das Gefälle des betreffenden Flachdaches ist.

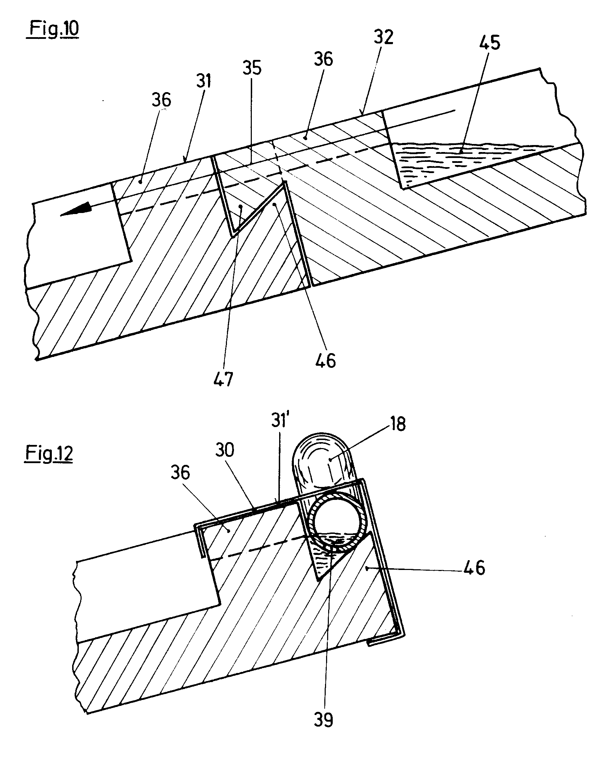

Wie aus Figur 10 hervorgeht, bleibt an der Innenseite des unteren Randsteges 32 jeder Trägerplatte 34 eine Wassermenge 45 aufgefangen und gespeichert, die in ihrer Größe, wie gesagt, von der Tiefe des Einschnitts der Wasserüberlaufrinne 36 und der Dachneigung abhängt.

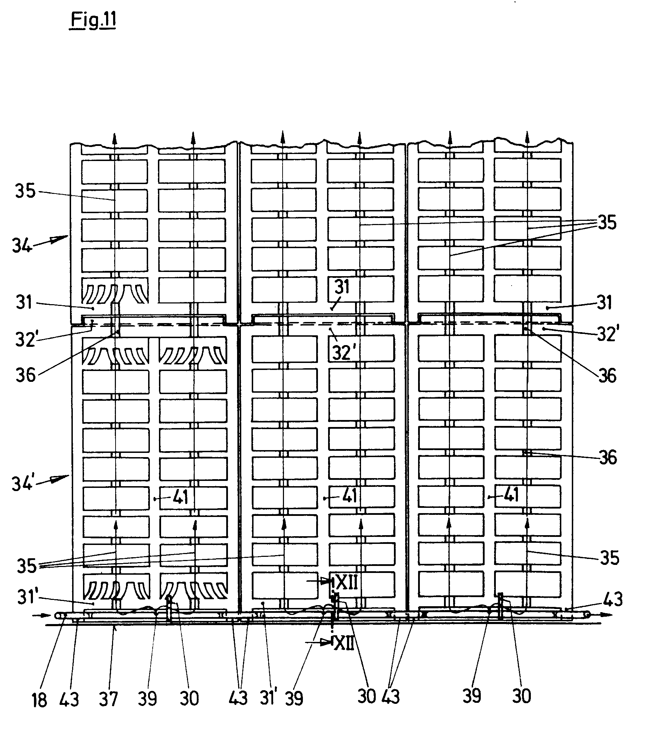

Die Figur 9 zeigt ferner, daß der obere Randsteg 31 einer Trägeplatte 34 zwei Randfortsätze 43, 43 aufweist, die in entsprechende Ausnehmungen 44, 44 des unteren Randstegs 32 der benachbarten Trägerplatte 34' eingreifen. Hierdurch wird ein seitliches Ablaufen von Wasser aus der durch den leistenförmigen Vorsprung 46 gebildeten Rinne verhindert. Die Bedeutung dieses Merkmals geht aus der nachfolgenden auf die Figur 11 Bezug nehmenden Erläuterung hervor.

Die unmittelbar an der Firstlinie 37 verlegte Trägerplatten 34', 34', 34',..., also die höchstgelegenen Trägerplatten, tragen an ihrem oberen Randsteg 31' ein durchgehendes Wasserrohr 18, in welches je nach Bedarf Wasser eingespeist wird, welches aus einer Wasseraustrittsöffnung 39 je Trägerplatte austritt und die durch den leistenförmigen Vorsprung 46 gebildete Rinne mit Wasser füllt. Dieses in dieser Rinne aufgefangene Wasser tritt dann über die Wasserüberlaufrinnen 36 in den Innenraum der Trägerplatte 34' über und von da über die weiteren Wasserüberlaufrinnen 36 in die nachfolgenden tiefer gelegenen Trägerplatten 34.

Das Wasserrohr 18 ist zweckmäßig aus leicht biegsamen Kunststoffrohr hergestellt, das mittels eines Klemmbügels 30 etwa in der Mitte des Randsteges 31 mit jeder Trägerplatte 34' verbunden werden kann. Das Wasserrohr 18 wölbt sich dann zur Längsseite der Trägerplatte 34' auf, um über die Fortsätze 43 hinwegzuführen, um so dann wieder mittels des nächsten Klemmbügels 30 heruntergedrückt und mit der benachbarten Trägerplatte 34' verbunden zu werden.

Das Wasserrohr 18 kann seine Wassereinspeisung aus einer Regenzisterne im Keller des Hauses beziehen, die bei Bedarf durch das öffentliche Trinkwassernetz ergänzt werden kann.

Auf diese Weise ist es möglich, über das Wasserrohr 18 immer nur so viel Wasser zuzuführen, daß die gesamten Trägerplatten durch aufgenommenes Wasser gewichtsmäßig immer nur leicht belastet sind, so daß Schrägdächer mit einer geringen Tragfähigkeit auch mit einer Dachbegrünung versehen werden können. Außerdem hat man es auf diese Weise in der Hand, selbst bei extrem regenarmen Zeiten das für die Vegetation notwendige Maß von Wasser zuzuführen.

## Patentansprüche

1. Trägerplatte für ein zur Dachbegrünung dienendes Pflanzsubstrat, bestehend aus auf der Dachhaut nebeneinander verlegten Wasserspeicherwannen, deren von Durchbrechungen freier Boden unterseitig einander kreuzende Wasserablaufrillen aufweist, deren Innenraum mit nach oben ragenden Erhebungen versehen ist und deren Oberseite über Wasserabflußkanäle mit den unterseitigen Wasserablaufrillen verbunden ist, sowie aus einem auf den Wasserspeicherwannen aufliegenden, das Pflanzsubstrat tragenden Filter- und Bewässerungsvlies,
dadurch gekennzeichnet,
- daß die die Wärmedämmung des Dachs bildenden Wasserspeicherwannen (3) aus an sich bekanntem Schaumkunststoff gebildet sind,
- daß die Wasserabflußkanäle (9) von der Oberseite der Wannenseitenwände oder von der Oberseite etwaiger die gleiche Höhe wie diese aufweisender Mittelstege ausgehen,
- daß die ebenfalls die Höhe der Wannenseitenwände aufweisenden Erhebungen im Wanneninnenraum eine etwa eine Daumenbreite nicht übersteigende Breite und einen dieser Breite entsprechenden Lichtabstand voneinander haben und
- daß auf diesen Erhebungen und unter dem Filter- und Bewässerungsvlies ein zwischen die Erhebungen eingreifender Dochtlappen angeordnet ist.

2. Trägerplatte nach Anspruch 1, dadurch gekennzeichnet, daß der freie Innenraum der Schaumkunststoffplatte (3) durch zwei quer zueinander verlaufende Mittelstege in vier Felder (8, 8,8,8) unterteilt ist.

3. Trägerplatte nach Anspruch 2, dadurch gekennzeichnet, daß in jedem Innenraumfeld (8) der Schaumkunststoffplatte (3) zwischen den Höckern oder Rippen (10,10,...) eine Mittelrille zur teilweisen Aufnahme eines Dochtlappens (4) vorgesehen ist.

4. Trägerplatte nach Anspruch 3, dadurch gekennzeichnet, daß die Rippen (10,10,...) S-förmig gekrümmt sind.

5. Trägerplatte nach Anspruch 1, dadurch gekennzeichnet, daß der aufgelegte Bewässerungsvlies (5) aus einer Rollenbahn aus unverrottbarem Polyesterfilz besteht.

6. Trägerplatte nach Anspruch 1, dadurch gekennzeichnet, daß
- der freie Innenraum durch eine Anzahl parallel zueinander verlaufender Zwischenstege (13, 13,...) in eine gleiche Anzahl von Feldern (28, 28,...) aufgeteilt und
- in jedem Feld (28, 28,...) ein Dochtlappen (24, 24,...) angeordnet ist.

7. Trägerplatte nach Anspruch 6, dadurch gekennzeichnet, daß in einem oder mehreren der Zwischenstege (16, 13) mehrere Wasserabflußlöcher (29, 29,...) vorgesehen sind, die unterseitig in einem System von Wasserablaufrillen (12, 12,...) einmünden.

8. Trägerplatte nach Anspruch 7, dadurch gekennzeichnet, daß die Wasserabflußlöcher (29, 29,...) durch eine Wasserablaufrinne (17) miteinander verbunden sind.

9. Trägerplatte nach Anspruch 6, dadurch gekennzeichnet, daß die Rippen (20,20,...) als Fortsätze der Zwischenstege (13, 13,...) ausgebildet sind.

10. Trägerplatte nach Anspruch 9, dadurch gekennzeichnet, daß die Rippen (20, 20,...) spitzwinklig zu den Zwischenstegen (13, 13,...) verlaufen.

11. Trägerplatte nach Anspruch 9, dadurch gekennzeichnet, daß
- eine Rippe (14) eines Zwischensteges (13) breiter bemessen ist als die übrigen Rippen (20, 20,...) und
- einen Einsteckschlitz (7) zum teilweisen Einstecken und Festklemmen eines Dochtlappens (24) aufweist.

12. Trägerplatte nach Anspruch 11, dadurch gekennzeichnet, daß die breiter bemessenen Rippen (14, 14) zweier benachbarter Innenraumfelder (28, 28) am ort von Rippen (20, 20,...) ungleicher Ordnungszahl vorgesehen sind.

13. Trägerplatte für ein zur Dachbegrünung dienendes Pflanzsubstrat, bestehend aus auf der Dachhaut nebeneinander verlegbaren Wasserspeicherwannen, die einen von Durchbrechungen freien Boden haben und deren Innenraum mit nach oben ragenden Erhebungen versehen ist, und mit einem auf den Wasserspeicherwannen aufliegenden, das Pflanzsubstrat tragenden Filter- und Bewässerungsvlies,
dadurch gekennzeichnet,
- daß die die Wärmedämmung des Dachs bildenden Wasserspeicherwannen (3) in an sich bekannter Weise aus Schaumkunststoff gebildet sind,
- daß bei geneigter Anordnung der Wasserspeicherwannen die Oberseite des jeweils oberen und unteren Randstegs (31, 32) sowie etwaiger Mittelstege (33) der Trägerplatte (34) in Einfallrichtung (35) verlaufende Wasserüberlaufrinnen (36) aufweisen,
- daß die Breite der Erhebungen und Ihr lichter Abstand voneinander etwa eine Daumenbreite nicht übersteigen,
- daß auf mehreren Erhebungen (10) ein teilweise in den Zwischenraum zwischen den Erhebungen hineinragender Dochtlappen (4) aufliegt und
- daß die an die Firstlinie (37) anstoßende Trägerplatte (34') an ihrem oberen Randsteg (31') einen Teil eines parallel zur Firstlinie (37) verlaufenden durchgehenden Wasserrohrs (18) mit einer Wasseraustrittsöffnung (39) je Trägerplatte trägt, in das je nach Bedarf Wasser eingespeist wird.

14. Trägerplatte nach Anspruch 13, dadurch gekennzeichnet, daß das durchgehende Wasserrohr (18) mittels Klemmbügel (30) an jeder Trägerplatte befestigt ist.

15. Trägerplatte nach Anspruch 13, dadurch gekennzeichnet, daß die oberen und unteren Randstege (31, 32) an ihren Außenseiten leistenförmige Vorsprünge (46, 47) aufweisen, die derart profiliert und hinterschnitten sind, daß sich die leistenförmigen Vorsprünge zweier benachbarter Trägerplatten gegenseitig hintergreifen und formschlüssig verbinden.

16. Trägerplatte nach einem der Ansprüche 13 bis 15, dadurch gekennzeichnet, daß die Trägerplatte an der Unterseite ein Rillengitter aufweist, welches von der Oberseite der Rand-oder Mittelstege (31, 32, 33) ausgehende und zur Plattenunterseite führende Überlaufwasserabflußkanäle (9) aufweist.

## Claims

1. A support plate for a plant substrate which serves for making a roof green, comprising water storage troughs which are disposed one beside the other on the roof covering and whose bottom, which is free of through openings, has mutually crossing water drain grooves at the underside, whose interior is provided with upwardly projecting raised portions, and whose top side is connected by way of water discharge passages to the water drain grooves at the underside, and a filter and irrigation fleece which lies on the water storage troughs and which carries the plant substrate,
characterised in that
- the water storage troughs (3) which form the thermal insulation of the roof are formed from per se known foam plastics material,
- the water discharge passages (9) start from the top side of the trough side walls or from the top side of central web portions, if provided, which are of the same height as the trough side walls,
- the raised portions in the trough interior, which are also of the sane height as the trough side walls, are of a width which does not exceed approximately a thumb's width, and have a spacing between the which corresponds to said width, and
- arranged on the raised portions and under the filter and irrigation fleece is a wick cloth which engages between the raised portions.

2. A support plate according to clad 1 characterised in that the free interior of the foam plastics material plate (3) is divided into four areas (8, 8, 8, 8) by two central web portions which extend transversely relative to each other.

3. A support plate according to claim 2 characterised in that provided in each interior area (8) of the foam plastics material plate (3) between the protuberances or ribs (10, 10,...) is a central groove for partially receiving a wick cloth (4).

4. A support plate according to claim 3 characterised in that the ribs (10, 10,...) are curved in an S-shape.

5. A support plate according to claim 1 characterised in that the applied irrigation fleece (5) comprises a roll web of rot-proof polyester felt.

6. A support plate according to claim 1 characterised in that
- the free interior is divided by a number of intermediate web portions (13, 13, ...) which extend parallel to each other into an equal number of areas (28, 28, ...), and
- a wick cloth (24, 24, ...) is arranged in each area (28, 28, ...).

7. A support plate according to claim 6 characterised in that provided in one or are of the intermediate web portions (16, 13) are a plurality of water discharge holes (29, 29, ...) which at the underside open into a system of water drain grooves (12, 12, ...).

8. A support plate according to claim 7 characterised in that the water discharge holes (29, 29, ...) are connected together by a water drain channel (17).

9. A support plate according to claim 6 characterised in that the ribs (20, 20, ...) are in the form of extensions of the intermediate web portions (13, 13, ...).

10. A support plate according to claim 9 characterised in that the ribs (20, 20, ...) extend at an acute angle relative to the intermediate web portions (13, 13, ...).

11. A support plate according to claim 9 characterised in that
- a rib (14) of an intermediate web portion (13) is wider than the other ribs (20, 20, ...) and
- has an insertion slot (7) for the partial insertion and clamping fast of a wick cloth (24).

12. A support plate according to claim 11 characterised in that the wider ribs (14, 14) of two adjacent interior areas (28, 28) are provided at the location of ribs (20, 20, ...) of odd ordinal numbers.

13. A support plate for a plant substrate which serves to make a roof green, comprising water storage troughs which can be disposed one beside the other on the roof covering and which have a bottom that is free from openings therethrough and whose interior is provided with upwardly projecting raised portions, and with a filter and irrigation fleece which lies on the water storage troughs and which carries the plant substrate,
characterised in that
- the water storage troughs (3) which form the thermal insulation of the roof are formed in per se known manner from foam plastics material,
- with an inclined arrangement of the water storage troughs, the top side of the respective upper and lower edge web portions (31, 32) and any central web portions (33) of the support plate (34) have water overflow channels (36) which extend in the direction of fall (35),
- the width of the raised portions and the spacing therebetween do not exceed approximately a thumb's width,
- lying on a plurality of raised poritons (10) is a wick cloth (4) which projects partially into the intermediate space between the raised portions, and
- the support plate (34') which abuts against the ridge line (37) carries at its upper edge web portion (31') a part of a continuous water pipe (18) which extends parallel to the ridge line (37), with a water outlet opening (39) for each carrier plate, into which pipe water is fed as required.

14. A support plate according to claim 13 characterised in that the continuous water pipe (18) is fixed to each support plate by means of clamping clips (30).

15. A support plate according to claim 13 characterised in that the upper and lower edge web portions (31, 32) have at their outsides strip-shaped projections (46, 47) which are so profiled and undercut that the strip-shaped projections of two adjacent support plates engage one behind the other and positively connect to each other.

16. A support plate according to one of claims 13 to 15 characterised in that at the underside the support plate has a grid-like groove array which has overflow water discharge passages (9) which start from the top side of the edge or central web portions (31, 32, 33) and which lead to the underside of the plate.

## Revendications

1. Plaque-support destinée à un substrat végétal servant à engazonner un toit, constituée de bacs d'emmagasinement d'eau, posés les uns à côté des autres sur la toiture, dont le fond, sans percées, présente des rigoles d'écoulement de l'eau qui se croisent les unes les autres par en-dessous, dont l'espace intérieur est pourvu de surélévations en saillie vers le haut,et dont le côté supérieur est,par l'intermédiaire de conduites d'évacuation de l'eau, relié aux rigoles d'écoulement de l'eau situées sur le côté inférieur, ainsi que d'un non-tissé de filtration et d'irrigation, posé sur les bacs d'emmagasinement de l'eau et portant le substrat végétal, caractérisée en ce que les bacs d'emmagasinement de l'eau (3), formant le calorifugeage du toit, sont constitués d'un plastique expansé connu en soi; que les conduites d'évacuation de l'eau (9) partent du côté supérieur des parois latérales des bacs ou du côté supérieur d'éventuelles traverses centrales ayant la même hauteur que ces dernières ; que les surélévations se trouvant dans l'espace intérieur des bacs, et qui elles aussi ont la même hauteur que les parois latérales des bacs, ont une largeur qui ne dépasse pas la largeur d'un pouce et font entre elles une distance correspondant à cette largeur ; et qu'un tissu à effet de mèche, pénétrant entre les surélévations, est disposé sur ces dernières et sous le non-tissé de filtration et d'irrigation.

2. Plaque-support selon la revendication 1, caractérisée en ce que l'espace intérieur libre de la plaque (3) en plastique expansé est subdivisé en quatre panneaux (8, 8, 8, 8) par deux traverses centrales perpendiculaires l'une à l'autre.

3. Plaque-support selon la revendication 2, caractérisée en ce qu'on prévoit une rainure centrale, destinée à loger partiellement un tissu à effet de mèche (4), dans chaque panneau (8) de l'espace intérieur de la plaque (3) en matière plastique expansée se trouvant entre les bosses ou nervures (10, 10, ...).

4. Plaque-support selon la revendication 3, caractérisée en ce que les nervures (10, 10, ...) sont recourbées en forme de S.

5. Plaque-support selon la revendication 1, caractérisée en ce que le non-tissé d'irrigation (5), posé horizontalement, est constitué d'une bande en rouleau d'un feutre de polyester imputrescible.

6. Plaque-support selon la revendication 1, caractérisée en ce que l'espace intérieur est, par un certain nombre de traverses intermédiaires (13, 13, ...) parallèles les unes aux autres, subdivisé en un nombre égal de panneaux (28, 28, ...) ; et que dans chaque panneau (28, 28, ...) est disposé un tissu à effet de mèche (24, 24, ...).

7. Plaque-support selon la revendication 6, caractérisée en ce qu'on prévoit dans une ou plusieurs des traverses intermédiaires (13, 13) plusieurs trous d'évacuation de l'eau (29, 29, ...) qui, par en-dessous, débouchent dans un système de rigoles d'écoulement de l'eau (12, 12, ...).

8. Plaque-support selon la revendication 7, caractérisée en ce que les trous d'évacuation de l'eau (29, 29, ...) sont reliés les uns aux autres par une rigole d'écoulement de l'eau (17).

9. Plaque-support selon la revendication 8, caractérisée en ce que les nervures (20, 20, ...) sont conçues comme des prolongements des traverses intermédiaires (13, 13, ...).

10. Plaque-support selon la revendication 9, caractérisée en ce que les nervures (20, 20, ...) forment un angle aigu avec les traverses intermédiaires (13, 13, ...).

11. Plaque-support selon la revendication 9, caractérisée en ce qu'une nervure (14) d'une traverse intermédiaire (13) a une largeur plus grande que les autres nervures (20, 20, ...), et possède une fente d'insertion (7), destinée à insérer partiellement et à fixer en place un tissu à effet de mèche (24).

12. Plaque-support selon la revendication 11, caractérisée en ce qu'on prévoit les nervures (14, 14), ayant une largeur plus grande, de deux panneaux voisins (28, 28) de l'espace intérieur, à la place de nervures (20, 20, ...) ayant des numéros différents.

13. Plaque-support destinée à un substrat végétal servant à l'engazonnement d'un toit, constituée de bacs d'emmagasinement de l'eau, pouvant être posés les uns à côté des autres sur la toiture, bacs ayant un fond sans percées et dont l'espace intérieur est pourvu de surélévations en saillie vers le haut, et avec un non-tissé de filtration et d'irrigation, posé sur les bacs d'emmagasinement de l'eau et portant le substrat végétal, caractérisée en ce que les bacs d'emmagasinement de l'eau (3) formant la calorifugeage du toit sont formés d'une manière connue en soi en un plastique expansé ; que, quand les bacs d'emmagasinement de l'eau sont en disposition inclinée, les côtés supérieurs de la traverse marginale supérieure et de la traverse marginale inférieure (31, 32) ainsi que des éventuelles traverses centrales (33) de la plaque support (34) présentent des rigoles de trop-plein d'eau (36) courant dans le sens de la pente (35) ; que la largeur des surélévations et leur écartement réciproque ne dépassent approximativement pas une largeur de pouce ; qu'un tissu à effet de mèche (4), pénétrant partiellement dans l'espace intermédiaire se trouvant entre les surélévations, est disposé sur plusieurs surélévations (10) ; et que la plaque-support (34') qui aboutit à la ligne de faite (37) porte, sur sa traverse marginale supérieure (31'), une partie d'un tuyau d'eau (18), continu, courant parallèlement à la ligne de faîte (37) et comportant un orifice de sortie de l'eau (39) par plaque-support, tuyau dans lequel, selon les besoins, on introduit de l'eau.

14. Plaque-support selon la revendication 13, caractérisée en ce que le tuyau d'eau continu (18) est fixé à chaque plaque-support à l'aide d'étriers de serrage (30).

15. Plaque-support selon la revendication 13, caractérisée en ce que les bords marginaux supérieurs et inférieurs (31, 32) présentent sur leurs faces extérieures des saillies (48, 49) en forme de baguettes, qui sont profilées et contre-dépouillées de façon que les saillies en forme de baguette de deux plaques-supports voisines soient en prise réciproque par l'arrière l'une de l'autre, en formant une liaison avec correspondance de forme.

16. Plaque-support selon l'une des revendications 13 à 15, caractérisée en ce que la plaque-support présente sur son côté inférieur un réseau de rigoles, qui présente des conduites d'évacuation (9) de l'eau de trop-plein, partant du côté supérieur des traverses marginales ou centrales (31, 32, 33) et conduisant au côté inférieur de la plaque.
